# EUROPEAN PATENT APPLICATION

(11) **EP 2 987 441 A1**
(43) Date of publication of application: **24.02.2016**
(21) Application number: 14181696.7
(22) Date of filing: 20.08.2014
(51) Int. Cl.: A47L 5/36, A47L 9/22

(54) **Vacuum cleaning device, method of its use and method of its manufacture**

(71) Applicant: Octrooifabriek B.V., 7513 AB Enschede (NL)
(72) Inventor: Zuidema, Sjors, 7522LK Enschede (NL)

(57) **Abstract**

The invention relates to a vacuum cleaner device suitable for sealable placement on a standard container, preferably a mini container according to the European standard EN 840-1 and/or a mini container according to the American standard ANSI Z245.60, wherein the device comprises a drum shaped chamber as separator. The vacuum cleaner device can comprise a drum shaped chamber, which comprises a cylinder shape, of which the height (H) is smaller than the radius (R).

## Description

The invention relates to a method and device for vacuum cleaning.

In the art, these kind of vacuum cleaning devices are sold e.g. as hand leaf vacuum cleaners in various do it yourself stores and specialist garden stores. These vacuum cleaning devices comprise a suction duct connected to a fan housing and a pressure duct that is at one side also connected to the fan housing. As storage for the vacuumed material, a collection bag is used that is connected to the other side of the pressure duct.

A disadvantage of these vacuum cleaners is that the cleaners get heavier during use because of the filling of the collection bag. When full the collection bag has to be emptied in a garbage container, due to which vacuumed debris can be disadvantageously be re-emitted.

An alternative solution is disclosed in the international patent application W)97/17880. A disadvantage of the device described herein is that for such devices, specially adapted collection containers need to be used.

If in the device, described in WO97/17880 a standard garbage container is used as collection container, this is insufficiently strong to withstand the needed vacuum pressure. Of these standard garbage containers, as they are described in detail in the European standard EN 840-1 the sidewalls will buckle inwards and the bottom wall can collapse, due to the relative high inwardly directed force.

The American patent application US2009/0007367 discloses a vacuum cleaner device for a standard garbage container, with a fan, a suction duct connected to a hose, and a downward directed pressure duct. In use on a standard container, the pressure duct points at the bottom wall of the standard container. The exit of the pressure duct blows an airstream with the vacuumed material directly into the container.

This provides an forceful air stream in the container, that is thus strong that a substantial part of the vacuumed material is being re-suspended. The re-suspended material are being entrained by the in the airstream, generated in the container and are being forced against the filter. Thus the filter gets readily clogged and the air stream is reduced. By the reduction of the airstream, the suction capacity reduces and even worse, by the reduced airstream the motor can get overheated.

The Dutch patent NL2007094, of the same applicant as the current application, discloses a vacuum cleaning device corresponding to the device as disclosed in US2009/0007367. This device similarly blows the airstream with the therein suspended vacuumed material in the container. It turned out that also in this embodiment the re-suspension in the container is thus forceful, that the filter gets similarly clogged and blocked. Similar problems thus render that this vacuum cleaner device does not provide a practically workable solution.

The solution that is proposed in the documents EP1537773 A1, NL1019659 C and FR2592817 A1 all show solutions where the container housing as such is used as vacuum chamber. From testing, it is shown that standard garbage containers are not sufficiently strong to withstand the forces of the needed vacuum or lower inside pressure. The side walls buckle inwards and the weakest part, the attachment of the bottom wall of the container appears to regularly collapse.

Thus none of the solutions proposed in these documents provide for a practically workable solution for standard garbage containers.

Thus the goal of the invention is to provide for a method and device that does not show the above listed and/or other disadvantages or at least partially alleviate these disadvantages while the advantages thereof are at least partially remained. Further, current invention aims to provide for a vacuum cleaner device that is light and easy manageable, claims relative little space and wherein the vacuumed debris can be collected in a standard garbage container without pouring over the debris.

At least one of these goals and/or other goals are obtained by a vacuum cleaner device suitable for sealable placement on a standard container, preferably a minicontainer according to the European standard EN 840-1 and/or a minicontainer according to the American standard ANSI Z245.60, wherein the device comprises a drum shaped chamber as separator. By the use of this drum shaped chamber as separator, is the airstream inside the container relative small and can thus be prevented that already collected debris in the container is getting re-suspended.

The drum shaped chamber can comprise a cylinder shape, of which the height (H) is smaller than the radius (R). Thus the required mounting height of this separator can remain relative modest, such that the mounting height of the vacuum cleaning device can remain relatively small.

The air inlet of the drum shaped chamber can be substantially tangentially positioned in the curved wall of the drum shaped chamber and a first outlet can be positioned substantially centrally in the upper surface of the drum shaped chamber.

By this arrangement of the outlet a substantial part of the in the airstream suspended material can be separated from the airstream.

A second outlet can be a slit shaped opening in the bottom wall of the cylindrical chamber wherein the slit shaped opening extends along a part of the outer edge of the bottom surface.

By this arrangement of the second outlet, solid material that is collected against the inner side of the curved wall, can drop into the container, while the airstream in this slit shaped opening is relatively low, such that any re-suspension of any material already present in the container can be prevented. Thus the vacuum cleaner device can be relative simple in its construction, relative small in its required mounting space, and still remarkably effective and efficient in the separation of material from the airstream generated by the vacuum cleaner device.

The slit shaped opening can substantially extent along the outer edge of the bottom wall, for example over a portion of 50-80% of the total circumference length of the outer edge, wherein the opening is preferably not present close to the air inlet of the drum shaped chamber.

Thus a mayor part of the curved surface of the chamber is used as a separator, while the bottom surface, with the remaining part, where the slit shaped opening does not extend, can be connected and attached to the fixed world.

The drum shaped chamber can comprise a detachable lid, preferably provided with screwing thread for connection to the vacuum cleaner device. By means of this detachable lid, the cleaning device can be properly cleaned, if any material may get collected in the separator unhoped for.

Advantageously can the lid be produced of a transparent plastic e.g. polycarbonate, such that the user can see if any unwanted collection of material in the separator has been taken place or not.

On the central exit of the drum shaped chamber, a filter unit can be arranged. Thus an eventually even better separation can be obtained of predominantly fine dust particles.

The central exit can comprise a tube shape, which shape is extending through the upper surface of the drum shaped chamber, into the drum shaped chamber. The vacuum cleaner device can comprise one or more clamps, for securing the device to the upper circumference of a standard garbage container. These clamps can pull the vacuum cleaning device forcefully against the circumference of the standard garbage container, such that a better closes sealing can be obtained.

The device can comprise a lower and an upper shell, in between which preferably a motor, a fan and the drum shaped chamber are arranged, wherein in the upper and/or lower shell integrally is arranged the fan housing, the suction duct, the pressure duct and/or the drum shaped chamber, for example as integrated pressure moulding parts.

By integrating the various components in the upper and/or lower shell, can be saved on the total number of parts, by means of which the manufacture can take place more efficiently and less complicated.

A flexible hose can be arranged on the suction duct, eventually comprising a rigid mouthpiece at its distal end. By means of this, the user can have the container positioned in one place, while he/she can clean a relative large portion of his or her garden or workshop.

The invention further relates to the use of a vacuum cleaner device as is described extensively herein above, for the vacuuming of organic material such as leaves, branches, fruits, etc. for the vacuuming of debris being generated during production and/or storage e.g. chippings, saw dust, packaging material, filling material, dust and/or liquid, for cleaning transport vehicles, boats, industrial buildings and areas, for cleaning storage spaces and/or containers.

The invention further relates to method of the manufacture of a vacuum cleaner device as described herein above, comprising the following steps to be placed in any suitable order; providing a fan and a fan housing with a pressure duct and a suction duct; arranging the fan and the fan housing in, on or under a support unit , wherein the support unit is provided with a sealing edge, which fits on a mini container, preferably a mini container according to the European standard EN 840-1 and/or the American standard ANSI Z245.60, substantially arranged and dimensioned sealing off fitting thereon, the arrangement of a drum shaped chamber on or in the support unit and the connection of the pressure duct from the fan housing tangentially on the curved surface of the drum shaped chamber.

The method can further comprise the step of the arrangement of a first central exit in the upper surface of the drum shaped chamber and a second diametrically arranged slit shaped exit in the lower surface along the curved wall of the drum shaped chamber.

In an alternative embodiment of the invention, the vacuum cleaner device comprises a support unit, a sealing edge, a motor, a fan, a fan housing, a suction and/or a pressure duct, wherein the motor and/or the fan housing are mounted on the support unit, wherein the fan is arranged rotatably in the fan housing and the fan is arranged to be driveable by the motor, wherein the suction and/or the pressure duct is/are arranged on the fan housing, wherein the support unit is provided with a sealing edge, which fits on the opening of a mini container, preferably on a mini container according to the European standard EN 840-1 and/or the American standard ANSI Z245.60, substantially arranged and dimensioned fitting and sealing off the container, wherein the vacuum cleaning device comprises a drum shaped chamber comprising a curved surface, an upper surface and a lower surface, wherein the pressure duct is connected from the fan housing substantially tangentially to the curved surface of the drum shaped chamber, wherein a first central exit is arranged in the upper surface of the drum shaped chamber and a second slit shaped exit is arranged along the curved surface, in the lower surface of the drum shaped chamber.

With such a device, can the material to be disposed of directly be transported into a standard container, wherein can be prevented, that large forces are exerted on the container. The vacuum cleaning device is relative easy in its use and can be decoupled from the standard container after its use.

Because the drum shaped chamber comprises a lower surface with a slit shaped exit, can re-suspension of the material present in the container be prevented, while through the slit shaped exit, solid vacuumed material can exit. The central exit arranged in the upper surface of the drum shaped chamber and he tangentially entering of the material laden air provide for a rotating stream of air, wherein the solid parts are forced outwards by means of their inertia, and are falling through the slit shaped exit by means of gravity. By means of the central exit in the upper surface of the drum shaped chamber, sufficiently air can escape and thus hardly any pressure is built up inside the container, as a consequence of which, the container is not exposed to major pressure forces.

On the central exit of the drum shaped chamber, a filter unit can be arranged. Thus exhaled air can be further filtered and thus fine dust and sand can be kept in the mini container. The filter unit can comprise a maze, a cloth, a paper and /or any other suitable filtering material. The filter unit can comprise one or a series of filters.

The motor and/or the fan housing can be integrated with the support unit.

The fan housing, the drum shaped chamber and/or the pressure duct or at least a portion thereof can be manufactured from the same material as the support unit, and/or be moulded in one piece and/or be manufactured in a different way from one piece of material.

By integrating the fan housing, and/or the drum shaped in the support unit, less manufacturing steps are necessary for the fabrication and less moulds are needed for the separate parts. This can render the manufacture more efficient and less expensive.

The suction duct can comprise a flexible hose. By means of this hose, the suction end can be more easily directed, without having to move the mini container.

The flexible hose can be protected against collapsing by means of rings or a spiral, that are manufactured from e.g. metal.

The vacuum cleaning device can comprise a rigid suction end, suitable for directed placement of a suction mouthpiece of the vacuum cleaning device. This rigid suction end can comprise at least one handle. Thus the operability and the user friendliness can be boosted.

The sealing edge can comprise a flexible sealing, which can provide for a better sealing.

The support unit can comprise at least one clamp. The support unit can furthermore at one end of its circumferential edge comprise an edge, which fits around an opening of a mini container and which can engage with or enclose a handle of a mini container. Thus the vacuum cleaning device can be better affixed and secured on the mini container.

Another embodiment of the invention relates to the use of a vacuum cleaning device as described herein above, for the use of vacuuming organic material such as leaves, branches, fruits, etc. , for the vacuuming of material, being released during production and/or storage such as chippings, saw dust, packaging material, filling material, dust and/or liquids, for the cleaning of transport vehicles, boats, industrial buildings or areas, for cleaning storage spaces and/or containers.

Another aspect of the invention is the a method of manufacturing a vacuum cleaner device as described herein above, comprising the following steps, to be executed in any suitable order; a) providing a fan and a fan housing comprising a suction ad a pressure duct, b) arranging the fan and the fan housing on in or under a support unit, wherein the support unit is provided with a sealing edge, which sealing edge fits on the opening of a mini container, preferably a mini container according to the European standard EN 840-1 and/or a mini container according to the American standard ANSI Z245.60, substantially arranged and dimensioned fitting and sealing thereon, c) connecting a pressure duct of the fan housing tangentially to a curved surface of a drum shaped chamber, e) arranging a central outlet in the upper surface of the drum shaped chamber and a diametrically arranged slit shaped exid in the lower surface of the drum shaped chamber.

In order to further elucidate the invention, exemplary embodiments will be described with reference to the figures. In the figures:
Figure 1 depicts a schematic perspective view of a vacuum cleaner device according to a first embodiment of the invention;
Figure 2 depicts a second schematic perspective view of a vacuum cleaner device according to the first embodiment of the invention;
Figure 3 depicts a third schematic perspective view of a vacuum cleaner device according to the first embodiment of the invention;
Figure 4 depicts a schematic perspective underside view of a vacuum cleaner device according to the first embodiment of the invention;
Figure 5 depicts a schematic partially exploded perspective view of a vacuum cleaner device according to the first embodiment of the invention;
Figure 6 depicts a schematic perspective top side view of a vacuum cleaner device according to a second embodiment of the invention;
Figure 7 depicts a schematic perspective underside view of a vacuum cleaner device according to a second embodiment of the invention;
Figure 8 depicts a schematic perspective top side view of a drum shaped chamber according to a further embodiment of the invention;
Figure 9 depicts a schematic perspective underside view of a drum shaped chamber according to figure 8;
Figure 10 depicts a schematic perspective top side view of another embodiment of the vacuum cleaning device according to the invention;
Figure 11 depicts a schematic perspective underside view of the vacuum cleaning device according to the embodiment of figure 10;
Figure 12 depicts a schematic perspective side view of a lid for the vacuum cleaning device according to the embodiment shown in figures 9 and 10;
Figure 13 depicts a schematic perspective topside view of a lid according to the embodiment shown in figure 12.

The figures represent specific exemplary embodiments of the inventions and should not be considered limiting the invention in any way or form. Throughout the description and the figures the same or corresponding reference numerals are used for the same or corresponding elements.

The expression "flexible material" used herein is to be understood as, though not to be considered limited to material which relatively weakly resists against deformation and eventually after deformation reflects or reshapes to its original form, This material has a elasticity modulus between 0.01 and 0.5 GPa.

The expression "rigid material" used herein is to be understood as, though not to be considered limited to material that relative strongly resists against deformation. This material has generally a elasticity modulus greater than about 0.5 GPa.

The expression "connected to" or words of similar meaning, related to ducts that are used herein is to be understood as, though not to be considered limited to parts that are thus connected, that at the connection a substantially fluid tight connection is obtained between the ducts and the part question.

The expressions "mini container", "standard container", standard garbage container" used herein are to be understood as, though not to be considered limited to containers of standardized sizes, such that these containers can be collected in a standardized garbage collection system and can emptied automatically, semi automatically or by hand. The relevant standard that describe these containers are for the European union EN 840-1, more specifically the herein specified containers according to classes I and II, with one of the edge types A, B or C and for the United States ANSI Z245.20, more specifically the containers according to the classes B, C, D and G. Both standards are incorporated in this description by reference in its entirety, and are considered to be an integral part of this specification and the appended claims.

The expression "drum shaped chamber" used herein is to be understood as, though not to be considered limited to a chamber in the shape of a short cylinder, comprising two in relation to one another substantially parallel arranged end surfaces, i.e. an upper surface and a lower surface, and comprising a curved surface, wherein the end surfaces are arranged substantially transversally in relation to the curved surface and wherein the diameter of the cylinder is larger than the height of the cylinder.

The expression "central" used herein is to be understood as, though not to be considered limited to a position substantially in the close surroundings of the geometrical centre of a surface. In the case of a substantially circular surface, this is in the close surroundings of the centre point of the circle.

The expression "diametrically" used herein is to be understood as, though not to be considered limited to a position at or along the outer edge of a surface. In the case of a circular surface, i.e. along the outer circumference or at least along a part thereof.

The expression "separator" used herein is to be understood as, though not to be considered limited to a part that is able to separate solid and/or liquid material from an airstream.

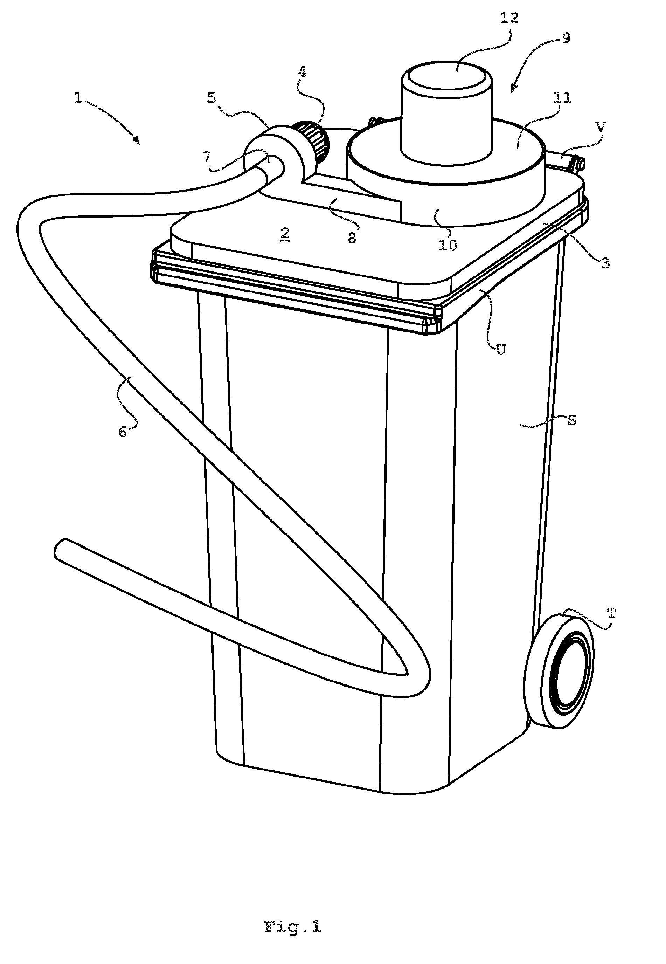

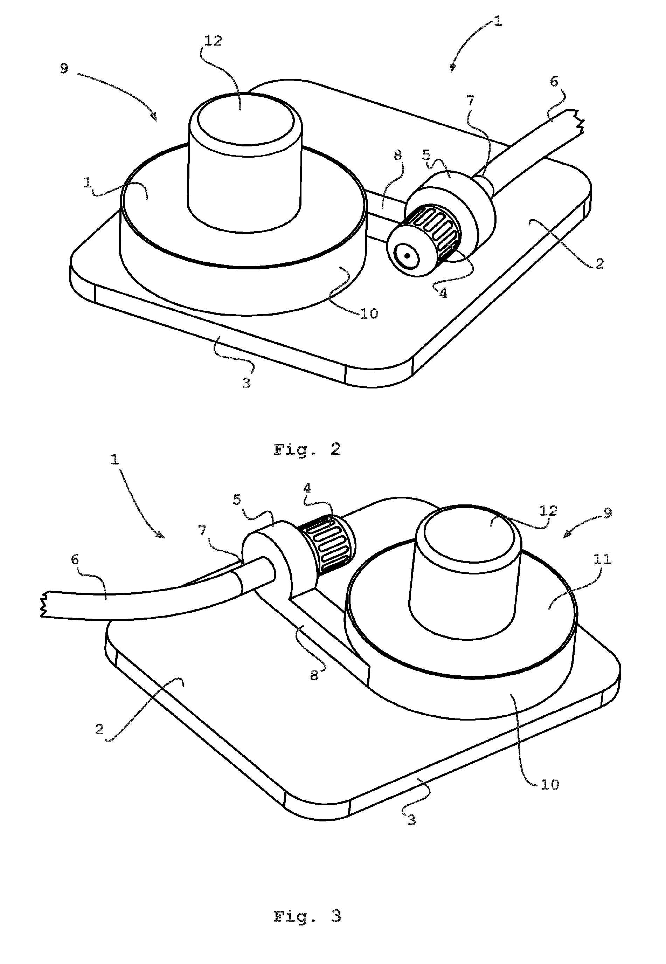

The figures 1 to 5 depict various views of an embodiment of the vacuum cleaning device 1 on a standard container S. The standard container S as it is depicted in figure 1 is a container that complies with the European standard EN 840-1. The container is for the operability provided with a two wheels T.

The vacuum cleaning device comprises a support unit 2 in the shape of a plate, which can close off the upper side of the container S and is provided with a sealing edge 3. The sealing edge can for example at the inner side be provided with a flexible or rubber like strip, in order to seal off the edge 3 substantially airtight to the container S. The support unit 2 can be provided with clamps or other connections in order to engage with the edge U of the container S and thus in order to attach the support unit to the container S.

On the support unit 2 is a motor 4 arranged, which drives a fan (not shown) in a fan housing 5. The fan housing is also attached on the support unit 2 and is provided with a suction duct 7 and a pressure duct 8. The suction duct 7 is connected with a flexible hose 6 and the pressure duct 8 is connected with the drum shaped chamber 9. The pressure duct 8 enters the drum shaped chamber 9 tangentially through its curved wall 10.

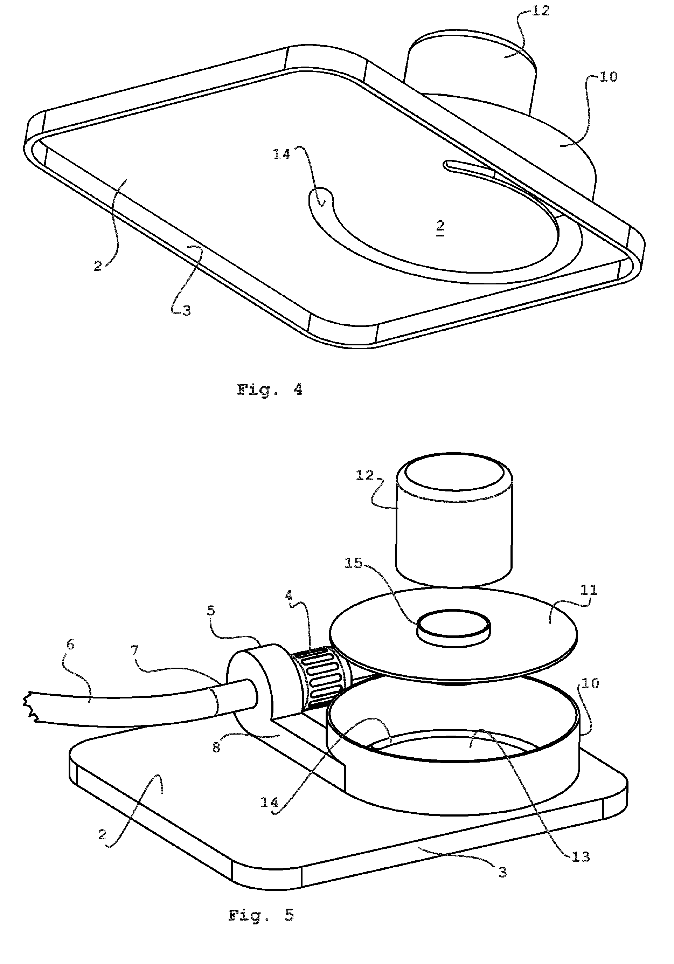

The drum shaped chamber 11 is provided with two exits 14 and 15, as is depicted in the figures 4 and 5. The first exit 15 is substantially centrally arranged in the upper surface 11 of the drum shaped chamber 9 and comprises a cylindrically shaped wall which protrudes through the upper surface 11 of the drum shaped chamber 9. The second exit is a curved slit 14, which is arranged in the bottom surface 13 of the drum shaped chamber 9 and which runs along a portion of the curved surface 10 of the drum shaped chamber 9.

The bottom surface 13 of the drum shaped chamber 11 coincides with the plate of the support unit, wherein the curved slit is opened to the underside of the support unit 2. When the vacuum cleaning device 1 is placed on a container S, as is depicted in figure 1, than is the second exit, the curved slit 14 of the drum shaped chamber 9 in connection with the inner volume of the container S.

In the drum shaped chamber 9 occurs, due to the tangential inlet and the centrally arranged first outlet 15, an rotating airstream that forces solid vacuumed material to the curved surface 10 due to inertia. Here, by means of gravity, this material can fall through the curved slit 14. Because the container S has a closed volume, there exists substantially no airstream through the curved slit 14. Thus already present vacuumed material or other material in the container can be prevented from re-suspension. The curved slit 14 can in the vicinity of the air inlet be connected to the curved wall 10, in order to further reduce any airstream in the inner volume of the container S. By this feature, the curved slit obtains a sort of horseshoe shape.

On the central exit 15, a filter 12 can be arranged. This filter can remove any eventual remaining dust particles from the airstream.

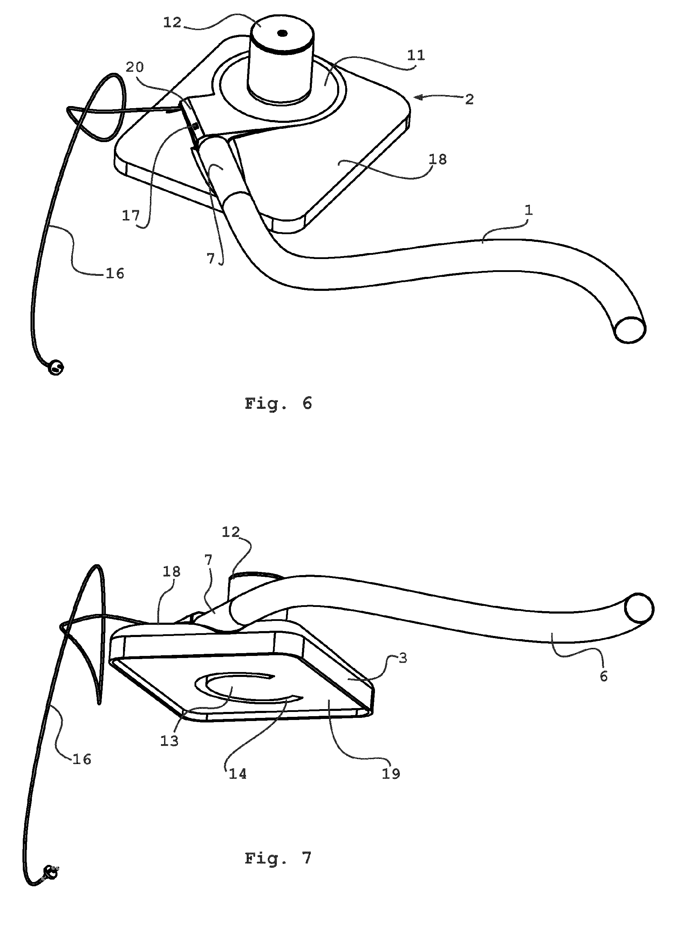

The drum shaped chamber 9 can be integrated in the support unit 2, as is depicted in figures 6 and 7. Here the support unit 2 is provided with a slightly curved lid 18 and a bottom surface 19, in between which motor 4, the fan housing 5 and the drum shaped chamber 9 are arranged. The support unit 2 can be provided with a control panel 20, on which for example a switch 17 can be arranged and from which a power supply cable 16 can extend, for supplying the motor 4.

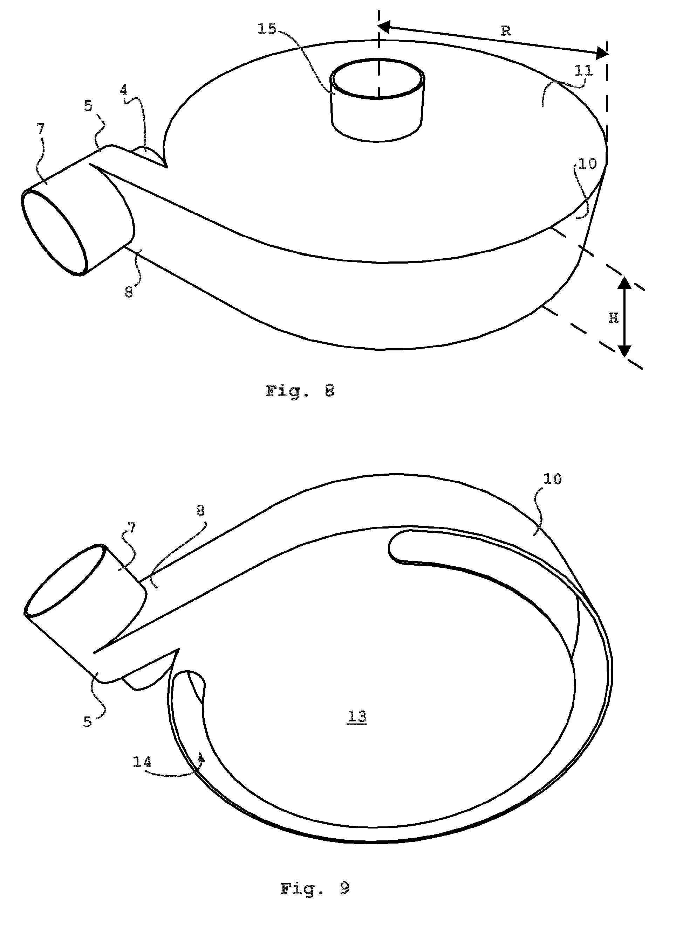

In figures 8 and 9 an alternative embodiment of the drum shaped chamber is depicted, as it can be used in current invention. In this embodiment is the suction duct 7 as inlet for the fan housing thus arranged, that the diameter of both is substantially the same and the one transforms smoothly into the other, wherein the pressure duct 8 enters directly as tangentially arranged inlet in the drum shaped chamber 9.

The central exit 15 extends also in this embodiment through the upper surface of the drum shaped chamber 9.

The drum shaped chamber comprises a radius R and a height H. The chamber can have dimensions such that the diameter, i.e. 2 times the Radius R is larger than the height H. Alternatively, the chamber can be dimensioned such that the radius R is larger than the height H. By these dimensions, the total height of the vacuum cleaning device 1 can be relative modest, while the separation of material from the airstream can remain sufficient.

In figure 9 is depicted, that the curved slit 14 extends along a substantial portion of the circumference of the bottom surface 13. At or close by the inlet, i.e. there where the pressure duct 8 is connected to the curved surface of the drum shaped chamber 9, comprises the slit an interruption.

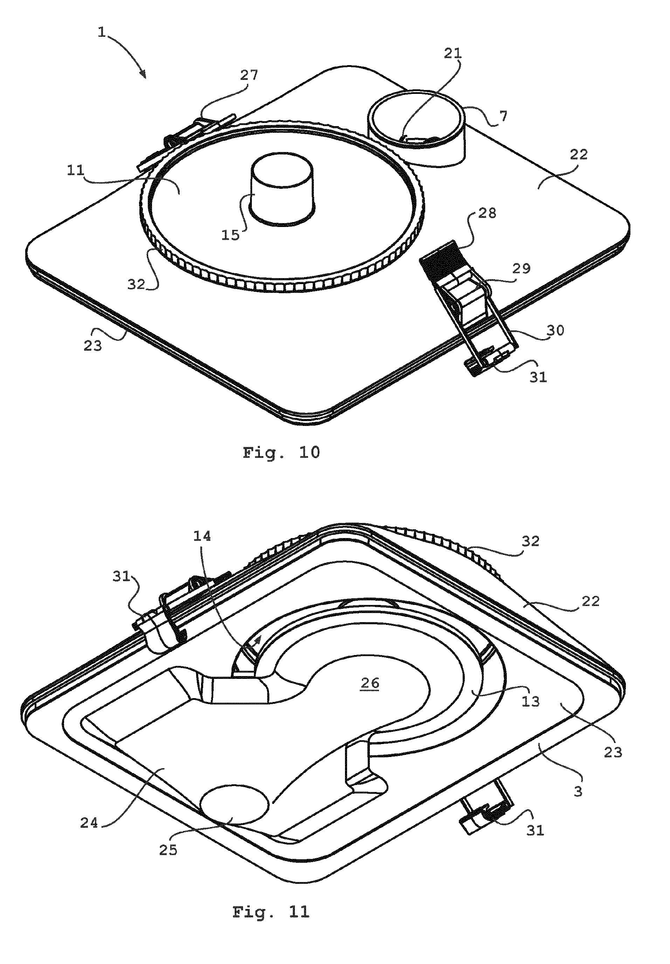

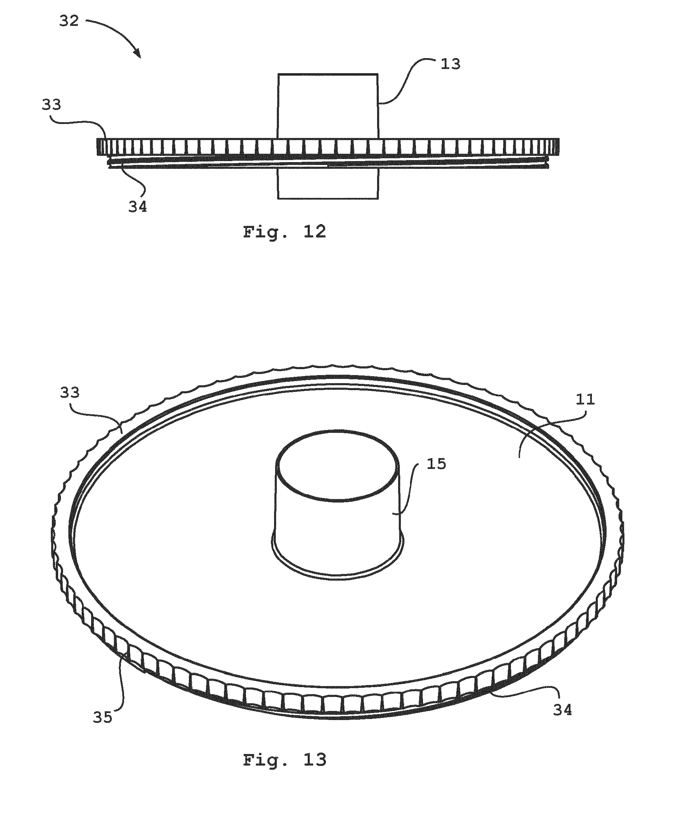

In figures 10 and 11 are two perspective views depicted of an alternative embodiment of the invention. In this embodiment, the vacuum cleaning device comprises two shells, an upper shell 22 and a lower shell 23. In between the shells 22 and 23, the motor the pressure duct, the fan housing, and the drum shaped chamber are arranged. In the upper shell 22 is an opening arranged, in which the upper surface of the drum shaped chamber 9 as a lid 32 can be arranged. This lid will be herein below further elucidated with reference to figures 12 and 13.

The vacuum cleaning device 1 comprises a suction duct 7, which in this embodiment is directed upwardly. Below the suction duct 7 is the fan is positioned in the fan housing. On the upper shell 222 are clamps 27 and 28 arranged, with which the vacuum cleaning device can be attached to the opening of a standard container.

The clamps 27 and 28 can be attached on supports 29, wherein the supports 29 form an integral part of the upper shell 22.

To the clamps 27 and 28 can a connector 30 be attached, which connects a hook 31 with the clamp 28. By means of positioning the hook 31 under the circumferential edge U of a standard container S, as is depicted in figure 1, and consecutively moving the clamp 28 towards the middle part of the vacuum cleaning device, the clamp 28 can, by means of a suitable lever action, attach the vacuum cleaning device on the opening of a standard container S.

The lower shell 23 comprises a sealing edge 3, which can fit on any standard container and can substantially airtight seal it off. By means of the clamps 27 and 28 can the sealing edge be tightly fitting on the circumferential edge U of the standard container S be arranged. Herein can the sealing edge comprise a flexible material such as a closed or a partly open foam rubber. The sealing edge 3 can also comprise a lamella or lip or a series of mutually parallel and parallel to the circumferential edge U of the standard container S extending lamellae or lips.

In the lower shell 23 is a curvature 24 arranged which can provide the lower shell 23 with shape specific rigidity and which can provide for a space in which the motor 4 can be arranged. The curvature 24 can also comprise a support plane 26 for supporting the bottom surface of the drum shaped chamber 9. Because the bottom surface 13 is equipped with the curved slit 14 at an substantial portion of the bottom surface, a strengthened connection can be advantageous. The curvature 24 in the support plane can provide this strengthened connection.

In figures 12 and 13 is a lid 32 of the drum shaped chamber depicted. In the upper surface 11 of the lid 32 is a central air exit 15 arranged, from where air can exit the vacuum cleaning device. The upper surface 11 is surrounded by an ribbed edge 33, provided with ribs 34.

The ribs 34 can provide additional grip in the case the lid 32 is to be removed and/or tightened.

The invention is to be understood not to be limited to the exemplary embodiments shown in the figures and described in the specification. For instance the suction end can comprise a rigid mouthpiece, which is eventually provided with a handle. Instead of one, this mouthpiece can comprise two handles as well. Apart from this, the vacuum cleaning device can comprise two motors instead. The motor can be equipped as an electrical motor, wherein an cable winder can be integrated in the vacuum cleaning device.

Alternatively or additionally a power source as a battery can be integrated in the vacuum cleaning device, which can be a removable or replaceable accumulator or a fixedly integrated accumulator or battery.

The motor can be provided as an fuel engine wherein the vacuum cleaning device can comprise an fuel tank. The vacuum cleaning device can comprise a hose carrier which can carry the hose 6. The sealing edge 3 can be thus arranged, that it can engage with the circumferential edge U of a mini container S instead of the handle V of the mini container.

These and other modifications are considered to be variations that are part of the framework, the spirit and the scope of the invention outlined in the claims.

### List of reference signs

- 1.: Vacuum cleaning device
- 2.: Support unit
- 3.: Sealing Edge
- 4.: Motor
- 5.: Fan housing
- 6.: Flexible hose
- 7.: Suction duct
- 8.: Pressure duct
- 9.: Drum shaped chamber
- 10.: Curved surface
- 11.: Upper surface
- 12.: Filter
- 13.: Bottom surface
- 14.: Curved slit
- 15.: Central exit
- 16.: Cable
- 17.: Control panel
- 18.: Lid
- 19.: Bottom plate
- 20.: Switch
- 21.: Fan
- 22.: Upper shell
- 23.: Lower shell
- 24.: Curvature
- 25.: Motor housing
- 26.: Support plane
- 27.: clamp
- 28.: Clamp
- 29.: Attachment
- 30.: Connection
- 31.: Hook
- 32.: Lid
- 33.: Ribbed edge
- 34.: Screw thread
- 35.: Rib
- H.: Height
- R.: Radius
- S.: Standard garbage container/ mini container
- T.: Wheel
- U.: Circumferential edge
- V.: Handle

## Claims

1. A vacuum cleaner device suitable for sealable placement on a standard container, preferably a mini container according to the European standard EN 840-1 and/or a mini container according to the American standard ANSI Z245.60, wherein the device comprises:
- a drum shaped chamber as separator.

2. A vacuum cleaner device according to claim 1, wherein the drum shaped chamber comprises a cylinder shape, of which the height (H) is smaller than the radius (R).

3. A vacuum cleaner device according to claim 2, wherein the air inlet of the drum shaped chamber is substantially tangentially positioned in the curved wall of the drum shaped chamber.

4. A vacuum cleaner device according to claim 2 or 3, wherein a first outlet is positioned substantially centrally in the upper surface of the drum shaped chamber.

5. A vacuum cleaner device according to any of the claims 2-4, wherein a second outlet is a slit shaped opening in the bottom wall of the cylindrical chamber wherein the slit shaped opening extends along a part of the outer edge of the bottom surface.

6. A vacuum cleaner device according to any of the claims 2-5, wherein the slit shaped opening extends substantially along the outer edge of the bottom wall.

7. A vacuum cleaner device according to any of the claims 2-6, wherein the slit shaped opening extends along the outer edge of the bottom wall over a portion of 50-80% of the total circumference length of the outer edge, wherein the opening is preferably not present close to the air inlet of the drum shaped chamber.

8. A vacuum cleaner device according to any of the preceding claims, wherein the drum shaped chamber comprises a detachable lid, preferably provided with screwing thread for connection to the vacuum cleaner device.

9. A vacuum cleaner device according to claim 4, wherein a filter unit is arranged on the first central exit of the drum shaped chamber.

10. A vacuum cleaner device according to claim 4, wherein the central exit comprises a tube shape, which shape is extending through the upper surface of the drum shaped chamber, into the drum shaped chamber.

11. A vacuum cleaner device according to any of the preceding claims, wherein the vacuum cleaner device comprises one or more clamps, for securing the device to the upper circumference of a standard garbage container.

12. A vacuum cleaner device according to any of the preceding claims, wherein the device comprises a lower and an upper shell, in between which preferably a motor, a fan and the drum shaped chamber are arranged.

13. A vacuum cleaner device according to claim 12, wherein in the upper and/or in the lower shell integrally is/are arranged the fan housing, the suction duct, the pressure duct and/or the drum shaped chamber, for example as integrated pressure moulding parts.

14. A vacuum cleaner device according to any of the preceding claims, wherein a flexible hose is arranged on the suction duct, eventually comprising a rigid mouthpiece at its distal end.

15. Use of a vacuum cleaner device according to any of the preceding claims, for the vacuuming of organic material such as leaves, branches, fruits, etc., for the vacuuming of debris being generated during production and/or storage e.g. chippings, saw dust, packaging material, filling material, dust and/or liquid, for cleaning transport vehicles, boats, industrial buildings and areas, for cleaning storage spaces and/or containers.

16. Method of the manufacture of a vacuum cleaner device according to any of the claims 1-14, comprising the following steps to be placed in any suitable order;
a) providing a fan and a fan housing with a pressure duct and a suction duct;
b) arranging the fan and the fan housing in, on or under a support unit, wherein the support unit is provided with a sealing edge, which fits on a mini container, preferably a mini container according to the European standard EN 840-1 and/or the American standard ANSI Z245.60, substantially arranged and dimensioned sealing off fitting thereon;
c) arranging a drum shaped chamber on or in the support unit; and
d) connecting of the pressure duct from the fan housing tangentially on the curved surface of the drum shaped chamber.

17. Method according to claim 16, wherein the method further comprises the step of:
d) arranging a first central exit in the upper surface of the drum shaped chamber and a second diametrically arranged slit shaped exit in the lower surface along the curved wall of the drum shaped chamber.
